Europäisches Patentamt

European Patent Office

Office européen des brevets

(11) Publication number: **0 202 068 B1**

# EUROPEAN PATENT SPECIFICATION

(45) Date of publication of patent specification: **28.08.91**  (51) Int. Cl.⁵: **B60J 1/20**

(21) Application number: **86303444.3**

(22) Date of filing: **07.05.86**

(54) **Deflector for directing downwards a flow of air along the surface of the rear window of a car.**

(30) Priority: **14.05.85 DK 2114/85**

(43) Date of publication of application:
**20.11.86 Bulletin 86/47**

(45) Publication of the grant of the patent:
**28.08.91 Bulletin 91/35**

(84) Designated Contracting States:
**AT BE CH DE FR GB IT LI LU NL SE**

(56) References cited:
| | |
|---|---|
| **DE-A- 3 150 746** | **FR-A- 2 491 857** |
| **FR-A- 2 501 708** | **FR-A- 2 534 196** |
| **US-A- 3 427 067** | **US-A- 3 799 603** |

(73) Proprietor: **THERMOFORM a/s**
**Elektronvej 10**
**DK-2670 Greve Strand(DK)**

(72) Inventor: **Hansen, Helge**
**7, Storeholm**
**DK-2670 Greve Strand(DK)**

(74) Representative: **Hartley, David et al**
**Withers & Rogers 4 Dyer's Buildings Holborn**
**London, EC1N 2JT(GB)**

EP 0 202 068 B1

## Description

The present invention relates to a deflector for directing downwards a flow of air along the surface of the rear window of a car.

Deflectors of this kind are known accessories for mounting especially on cars having a rather steep rear window, which is practically in line with the back of the car. The purpose of such deflectors is to direct part of the air flow, passing above the top of the car, downwards along the surface of the rear window of the car in order to prevent dust and dirty water drops, being present in the slipstream of the car, from being deposited on the rear window of the car and thus reduce the visibility through the window. It has been suggested to incorporate the deflector as part of the car body, but this solution is not appropriate for existing cars. Deflectors for mounting, on existing cars, are delivered with mounting members which are screwed or fixed to the painted metal parts of the car presenting considerable drawbacks. In many cases little space is available for the mounting on the frame of the rear door of the car, thus preventing a sufficiently strong mounting and where the mounting members are fastened on the car body itself above the rear door, the mounting members may well prevent the opening of the rear door. Also, most car owners strongly resent having to make holes (for fastening the mounting members) in the car body, particularly since such holes form centres for later corrosion. US patent specification No 3,427,067 (corresponding to the preamble of claims) discloses a deflector comprising a curved, elongated plate placed substantially parallel to the rear window and having its upper edge just above the roof-line of the car and being mounted by means of adjustable mounting means, fastened to the glass of the rear window itself. Its mounting means are intended to be engaged with the upper edge of the glass panel, when the window is lowered, and after the window is raised, the deflector is clamped between the glass panel and the feltliner in the frame of the rear window. Thereafter, the mounting means are adjusted to bring the elongate member into a position just above the roof-line of the car.

Many modern cars have a fixed window in the rear door, in which case the known deflector cannot be used.

One object of the invention is to provide a deflector, which may be used with fixed windows, and which does not require any fastening to the metal parts of the car.

According to the present invention, we propose a deflector for directing a flow of air downwards along the surface of the rear window of a car and comprising a curved, elongate plate placed substantially parallel to the rear window and having its upper edge just above the roof-line of the car and being mounted by adjustable mounting means to the glass of the rear window itself, and said mounting means comprising an adjusting member supporting the plate, wherein the mounting means further comprise a glue-plate which is fastened by gluing to the window, and a connecting part which is detachably secured to the glue-plate by means of a finger, and a connector, which is releasable by means of a key, the connecting part, the adjusting member and the plate being mutually displaceable and secured together by means of a screw.

In the preferred embodiment, the two other members are mutually displaceable permitting adjustment to a desired relative position in which they can be secured by the screw. Thus the angle of incidence of the curve plate may be altered to achieve correct mounting of the plate on various car types and models.

The key-operated releasable connection allows cleaning of the window under the deflector plate when necessary without changing the adjustment of the plate with respect to the roof-line of the car and without any need for tools.

An embodiment of the invention will now be described by way of example with reference to the accompanying drawings in which:

Fig. 1 schematically and in perspective view shows a deflector mounted on the rear part of a car; and

Fig. 2 shows the deflector seen from the end.

Some cars, having a rather steep rear end and a door giving access from the rear to the interior of the car, are exposed to dirt from the road settling on the window of the rear door of the car so reducing visibility.

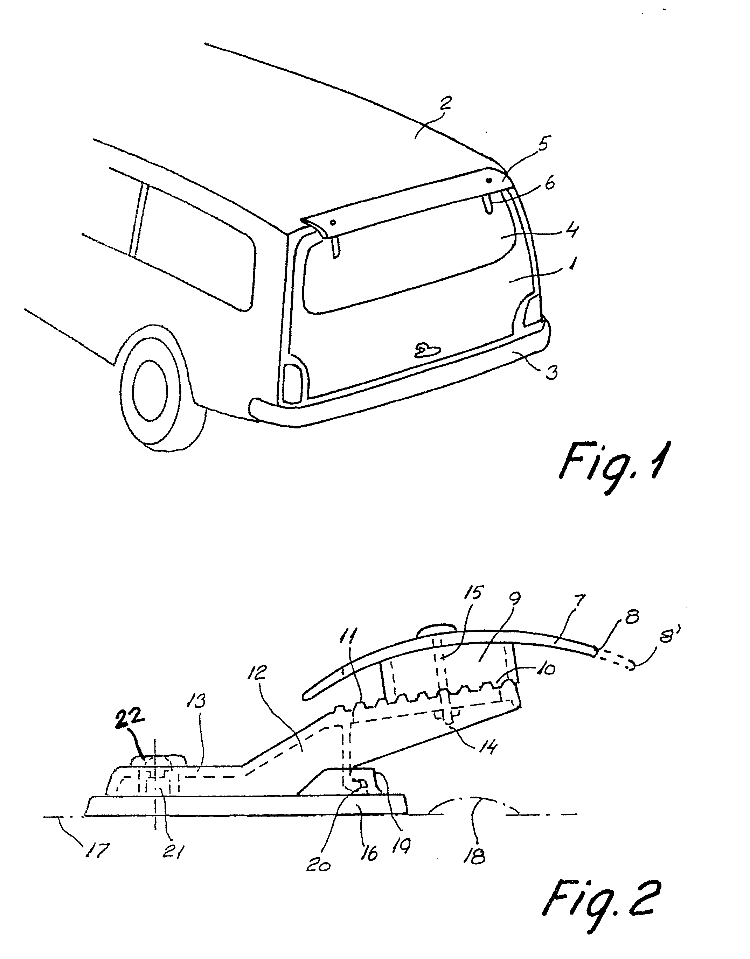

The rear door 1 of the car shown in Fig. 1 is hinged at the rear edge of the roof 2 of the car and to open upwards from the bumper of the car so that the door in its opened position forms an open shed over the opening of the door. The rear door is normally provided with a window 4, enabling the driver to look backwards from his seat. In order to prevent road dirt in the turbulence of the slipstream, from settling on the rear window of the car, a deflector 5 is placed above the window and has its front edge located just above the roof-line of the car thereby directing part of the flow of air along the roof of the car downwards along the rear window 4. The flow of air thus diverted fills the low pressure just behind the car and thereby prevents the road dirt from being drawn to the rear part of the car and deposited there. In order to avoid the need to drill holes for fastening the mounting members the deflector according to the invention has mounting means 6 including members fastened to the rear window of the car by means of glue-plates which are glued to the outer side of the window.

In Fig. 2 the deflector 5 and its mounting members are shown in more detail, seen from one end thereof. The deflector comprises a curved, elongate plate 7 so positioned that the front edge thereof, seen in the direction of travel, is just above the roof-line of the car. The plate is secured to a slidable mounting member 9 which supports the plate 7 and also allows the plate, due to the curvature thereof, to be placed higher as indicated by dotted lines at 8'. Opposite the plate 7 the mounting member has a teeth 10 in mesh with a corresponding teeth 11 on a connecting part 12. The connecting part comprises a securing part 13 and an obliquely projecting arm 14 on the upper side of which the teeth 11 are located. In the mounting member 9 as well as in the projecting arm 14, holes are provided allowing for a screw 15 to be put through the two mounting members irrespective of how the two sets of teeth 10, 11 mesh with each other and also allowing for the curved plate to be fastened to the slidable mounting member 9 in various positions. The securing part 13 is secured to a glue-plate 16 which by means of an epoxy, neoprene or silicone glue can be secured to the rear window 17 of the car, the window being shown in dotted lines. Normally the glue-plate is fastened close to the upper rubber list 18 of the rear window. The glue-plate 16 has an abutment 19 with a pocket into which a finger 20 on the fastening part 13 of the mounting member is inserted. The glue-plate also has a pin 21 for a connector 22 positioned on the securing part 13. When the securing part is positioned with the finger 20 under the abutment on the glue-plate 16 and the connector is pressed down on the pin 21, the connecting member and thus the deflector are secured to the car. To release the connector it is preferred to use a key (not shown) which disengages the catches of the connector, after which the deflector can be removed from the car for possible cleaning under the deflector or for examining the hinges of the rear door.

By securing the deflector to the rear window of the car the drilling of holes in the metal parts of the car or other damaging of the paint of the car are avoided. The mounting member may be produced from die-cast plastic material, and a single set of glue-plates and mounting members combined with few variants of the connecting part makes it possible to secure the deflector on a wide variety of cars.

## Claims

1. Deflector for directing a flow of air downwards along the surface of the rear window (17) of a car and comprising a curved, elongate plate (7) placed substantially parallel to the rear window (17) and having its upper edge just above the roof-line (2) of the car and being mounted by adjustable mounting means (6), to the glass of the rear window itself, and said mounting means 96) comprising an adjusting member (9) supporting the plate (7), characterised in that the mounting means further comprise a glue-plate (16), which is fastened by gluing to the window, and a connecting part, (12) which is detachably secured to the glue-plate (16) by means of a finger (20), and a connector (22), which is releasable by means of a key, the connecting part (12), the adjusting member (9) and the plate being mutually displaceable and secured together by means of a screw (15).

## Revendications

1. Déflecteur de vent pour diriger celui-ci vers le bas le long de la lunette arrière (17) d'un véhicule automobile et comprenant un volet incurvé et oblong (7) monté approximativement parallèlement à la lunette arrière (17), son bord supérieur se situant immédiatement au-dessus du niveau du toit de l'automobile (2) et étant fixé par des moyens de support réglables (6) directement sur le vitre de la lunette arrière, lesdits moyens de support (6) comprenant un élemént de réglage (9), qui supporte le volet (7), caractérisé par le fait que les moyens de support comprennent en outre une lame adhésive (16), qui est fixé par collage au vitre, et une pièce de liaison (12) fixée de manière détachable à la plaque adhésive (16) par un doigt (20), et un connecteur (22) dégagable à l'aide d'une clef, la pièce de liaison (12), l'élémant de réglage et le volet (7) étant mutuellement déplacables et fixés au moyen d'une vis (15).

## Patentansprüche

1. Abweiser zum Abwärtsrichten eines Luftstromes entlang der Oberfläche dar Heckscheibe (17) eines Autos, welcher eine gekrümmte längliche Platte (7) enthält, die im wesentlichen parallel zu dar Heckscheibe (17) angeordnet ist, und deren Oberkante gerade über der Dachlinie (2) des Autos ist, wobei der Abweiser mittels eines Befestigungsgliedes (6) an dem Glas der Heckscheibe (17) selbst befestigt ist, welches Befestigungsglied (6) ein verschiebbares Befestigungsglied (9) aufweist, das die Platte (7) unterstützt, **dadurch gekennzeichnet,** dass die Befestigungsglieder eine Klebeplatte umfassen, die an das Glas mittels eines Klebers anhaftet, sowie einen Verbindungsteil (12), dar lösbar an der Klebeplatte (16) mittels eines Fingers (20) und eines Verbinders (22) befestigt ist, welcher Verbinder mittels eines Schlüssels lösbar ist, wobei der Verbindungsteil (12), das Befestigungsglied (9) und die Platte (7) gegeneinander versetzbar und mittels einer Schraube (15) befestigt sind.

Fig.1

Fig.2